# EUROPÄISCHE PATENTSCHRIFT

(11) **EP 2 376 400 B1**
(45) Veröffentlichungstag und Bekanntmachung des Hinweises auf die Patenterteilung: **24.02.2016**
(21) Anmeldenummer: 09768331.2
(22) Anmeldetag: 03.12.2009
(51) Int. Cl.: C04B 20/10, C04B 26/02, C04B 26/16, C04B 38/08

(54) **OFFENPORIGER FORMKÖRPER UND VERFAHREN ZU DESSEN HERSTELLUNG**
OPEN PORE MOLD AND METHOD FOR PRODUCING THE SAME
CORPS MOULÉ À PORES OUVERTS ET PROCÉDÉ DE FABRICATION ASSOCIÉ

(30) Priorität: 19.12.2008 DE 102008063815; 05.03.2009 DE 102009011263
(43) Veröffentlichungstag der Anmeldung: 19.10.2011
(73) Patentinhaber: DENNERT PORAVER GmbH, 92353 Postbauer-Heng (DE)
(72) Erfinder: KOHLSTADT, Hans-Peter, 42549 Velbert (DE)
(74) Vertreter: FDST Patentanwälte
(86) Internationale Anmeldenummer: PCT/EP2009/008623
(87) Internationale Veröffentlichungsnummer: WO 2010/078895

(56) Entgegenhaltungen:
- EP-A2- 0 420 022
- EP-A2- 1 188 730
- WO-A1-97/49532
- AT-B- 119 740
- DE-A1-102007 012 973

## Beschreibung

Die Erfindung betrifft einen offenporigen Formkörper auf der Basis von anorganischen, teilweise offenporigen Granulaten und organischen Bindemitteln sowie seine Herstellung.

Derartige Formkörper sind seit Jahrzehnten bekannt. In der DE 195 21 666 A1 wird eine selbsttragende, elastische und komprimierbare Adsorptionsfilterschicht aus einem hochluftdurchlässigen Trägermaterial und aus einem mit einer Haftmasse fixierten Adsorbens beschrieben. Als Trägermaterial kann jeder großporige Schaum, insbesondere ein retikulierter PU-Schaum verwendet werden. Als Haftmasse können organische, vernetzbare Polymere, wie z. B. Polyurethan-Kleber verwendet werden. Als Adsorbens können u. a. hydrophobe Molekularsiebe verwendet werden. In vielen Fällen ist ein komprimierbarer Formkörper nachteilig und ein formstabiler Formkörper mit einer gewissen Druckfestigkeit notwendig.

In der DE 102 41 978 A1 wird ein nicht brennbares, feuchtigkeitsregulierendes und schallabsorbierendes Formteil aus einem Mineralschaumgranulat und/oder Blähglas und/oder expandierendem Mineral und einem nicht brennbaren, anorganischen Bindemittel, insbesondere Calciumsulfat beschrieben. Die Dichte beträgt ca. 400 g/l, inklusiv Glasvlies an Ober- und Unterseite.

In der DD 231 338 B1 wird ein feuerfester, wärmedämmender Formkörper aus einem porösen Granulat, üblichen Bindemitteln und wasserlöslichen feinen Teilchen mit nadeliger, stäbchenförmiger oder faseriger Gestalt und mit bestimmten Längen und Breiten beschrieben. Die Dichte beträgt 1,14 g/cm³. Eine Hydrophobierung des porösen Granulats soll sich durch die feinen Teilchen erübrigen.

In der DE 10 2007 012973 A1 wird ein wasserdurchlässiger Steinverbundformkörper aus 1 bis 35 Gew.-% reaktiven Polyurethanklebstoffen oder Polyurethanvergussmassen zusammen mit 99 bis 65 Gew.% an Granulaten aus mineralischen Stoffen oder Kunststoffen beschrieben, die stabile Platten und Formkörper bilden. Als Granulate werden z. B. Steine, Kies, Schotter, Grobsand, Splitt, Keramik, Glas und Kunststoffgranulate angegeben. Von porösen und beschichten Granulaten, insbesondere von Leicht-Granulaten mit hydrophobierter Oberfläche, ist keine Rede. Der 2-Komponenten-Polyurethan-Klebstoff ist eine Mischung aus der Polyol- und der Isocyanat-Komponente. Die Polyol-Komponente enthält u. a. - 10 bis 98 Gew.-% mindestens eines oleochemischen Polyols, - 1 bis 20 Gew.-% eines trocknenden Öls, z. B. Leinöl, und - 0 bis 75 Gew.-% an Hilfsstoffen, u. a. Hohlkugeln. Ausgehärtet wird zwischen 5 und 80 °C. Nachteilig ist u. a. das hohe Gewicht der Formkörper wegen der kompakten Füllstoffe. Es kann nur geringfügig verringert werden durch Beimischen von Hohlkugeln als Hilfsstoff des Polyurethanklebstoffes.

In der EP 1 541 605 A2 werden Platten und Formkörper auf Basis von Polyurethan-Bindemitteln aus mindestens einem Polyisocyanat, Polyolen, langkettigen Fettsäuren, gegebenenfalls Wasser und Aminen mit Füllstoffen beschrieben, wobei u. a. auch Blähton, Blähglas, Blähkeramik, Keramik- oder Glashohlkugeln oder deren Gemische genannt werden. Die Füllstoffe sollen eine runde oder ovale oder völlig unregelmäßige Struktur aufweisen. Von offenporigen beschichteten Füllstoffen ist keine Rede. Das Verhältnis von Bindemittel zu Füllstoffen soll zwischen 0,5:9,5 bis 5:5 liegen, wobei unklar ist, ob es sich um Volumen- oder Gewichts-Anteile handelt. Selbst bei niedrigem Bindemittelgehalt sollen Platten bzw. Halbzeug mit hoher Festigkeit und hoher Flexibilität erzielt werden. Die Aushärtung erfolgt bei einem Druck von 1 MPa bis 40 MPa und bei Temperaturen von 60 °C bis 180 °C für 1 bis 30 min in geschlossenen Formen. Nachteilig ist vor allem, dass weder die Füllstoffe noch der Formkörper selbst nennenswert porös ist und daher praktisch kein Wasser durchlässt.

In der DE 195 20 367 A1 wird ein Leicht-Filter beschrieben, bei dem Schaumglas durch Polyurethan-Bindemittel gebunden ist, wobei das Mengenverhältnis von Schaumglas: Polyurethan-Bindemittel kleiner als 5:1, insbesondere keiner als 3:1 sein soll. Unter einem Schaumglas wird ein erstarrter Glasschaum mit luftdicht geschlossenen Zellen verstanden, die mit Gas gefüllt sind. Er liegt in runden, vorzugsweise kugelförmigen Partikeln vor. Im Beispiel werden Glaspartikel von Dennert Poraver verwendet. Von hydrophobiertem Schaumglas ist keine Rede. Zur Herstellung des Polyurethan-Klebstoffes kommen insbesondere die an sich bekannten Polyhydroxy-Polyether in Frage sowie alle mehrwertigen aromatischen und aliphatischen Isocyanate. Zur Herstellung von Filter mit hoher Wasserdurchflussrate werden im Allgemeinen 1 bis 12 Gew.-%, bezogen auf das Polyol, eine "Andickung von Alumino-Silikaten" eingesetzt, vorzugsweise eine Absorberpaste auf der Basis von Ricinusöl, wodurch die Feuchtigkeit in den PU-Komponenten unschädlich gemacht werden soll. Ausgehärtet wird bei Temperaturen von mehr als 120 °C. Nachteilig ist u. a. der hohe Gehalt an Polyurethan-Bindemittel und damit die Verteuerung der Filter.

In der DE 2006 000 751 U1 wir ein Formkörper aus a) Kunststoffen mit mindestens 50 Gew.-% Polyester-, Epoxid-, Polystyrol-, Polyurethan- und/oder Polyamid-Anteil, b) mineralischen Leichtzuschlagstoffen und c) nachwachsenden Rohstoffen beschrieben. Im Beispiel werden 30 Gew.-% Pulverlackreste, 20 Gew.-% recycelte Glaskugeln (Poraver®) und 20 Gew.-% Seegras mit 30 Gew.-% des Zweikomponenten-Klebstoffes (Henkel-Ubatol UK 820) bei 20 °C in ca. 10 Minuten gebunden. Nachteilig ist u.a. wiederum der hohe Anteil an Klebstoffen und damit einhergehend die fehlende Wasserdurchlässigkeit sowie der hohe Preis der Formkörper.

In der EP 1 188 730 A2 werden kunststoffgebundene, gefügedichte Leichtbauwerkstoffe aus einem mineralischen Schaumgranulat und einem organischen Bindemittel beschrieben, wobei der Volumenanteil des Leichtgranulats im Werkstoff mindestens 50 % beträgt, vorzugsweise mindestens 90 %. Die Leichtgranulate sind entweder geschlossen-porig oder weisen in besonderen Anwendungen eine nur geringe offene Oberflächen-Porosität im Bereich von 1 bis 10 % bezogen auf das Gesamtvolumen auf. Die Infiltrierbarkeit des Korns durch das Bindemittel ist auf diese Porosität begrenzt. Als Leichtgranulate wird unter anderem Poraver genannt. Von hydrophobierten Granulaten ist keine Rede. Zu den geeigneten Bindemitteln gehören die Duroplasten, z. B. Epoxidharz, Polyurethan, Phenolharz, ungesättigte Polyester und Silikonharz. Die Aufgabe, preisgünstige Leichtbauwerkstoffe zu entwickeln, wird durch eine hohe Packungsdichte aufgrund der Mischung von möglichst einheitlich und kugelförmigen Leichtgranulaten mit z. B. drei unterschiedlichen Korngrößengruppen gelöst, womit der Bedarf an relativ teurem Bindmittel verringert wird. Nachteilig ist u. a., dass der Leichtbauwerkstoff gefügedicht, also wasserundurchlässig ist und eine Dichte von mehr als 400 kg/m³ hat.

Als nächstkommender Stand der Technik ist EP 0 420 022 A2 zu nennen. Diese Druckschrift offenbart Formkörper auf der Basis poriger Mineralstoffe, wobei unter anderem Vermiculite, Glashohlkugeln sowie geblähte Tonkugeln ganz allgemein angegeben sind. Als besonders geeignet wird der körnige, porige Mineralstoff Perlit, ein natürliches, vulkanisches Material bezeichnet. Ausschließlich im Zusammenhang mit diesem Material wird eine Hydrophobierung des Materials zur Erzeilung eines wasserabweisenden Effektes und einer besseren Haftung des Bindemittels erwähnt.

Zur Bindung dieses Materials wird ein 2-K-Polyurethan-System aus einer Polyolverbindung und einer Isocyanatverbindung angegeben.Auf der Basis eines schnell abbindenden Mörtels aus hydrophobiertem Puffperlit und dem 2-K-Polyurethan-Bindemittelsystem sollen Formkörper, etwa Platten hergestellt werden.

Im einzigen Ausführungsbeispiel dieses Dokuments wird ein Dämmmörtel offenbart, der offensichtlich als Bodenausgleichsmaterial eingesetzt werden soll. Es ergibt sich aus den dortigen Angaben eine Begehbarkeit nach 1,5 bis 3 Stunden und einer Druckfestigkeit von mindestens 10 N/cm² nach 2 bis 3 Stunden Abbindezeit und einer Zugfestigkeit von 0,5 N/cm^{2"} nach 2 Stunden Abbindezeit.

Die erfindungsgemäße Aufgabe ist es, die Nachteile der Lehren der zitierten Dokumente ganz oder teilweise zu beseitigen, insbesondere soll also ein offenporiger Formkörper mit niedriger Dichte und besonders niedrigem Klebstoff-Anteil, aber ohne Verringerung der Festigkeit, insbesondere der Biegefestigkeit, geschaffen werden. Der niedrige Klebstoff-Anteil hat niedrige Herstellungskosten und in der Regel auch ein günstiges Brandverhalten zur Folge. Mit der Offenporigkeit des Formkörpers geht einher eine hohe Wasserdurchlässigkeit sowie ein besonderes akustisches Verhalten.

Die erfindungsgemäße Lösung gemäß Patentanspruch 1 sieht vor einen offenporigen Formkörper auf der Basis von anorganischen, teilweise offenporigen, annähernd kugelförmigen Leicht-Granulaten bestehend aus Blähglas, sowie mit einer Schüttdichte von 0,10 bis 0,60 kg/dm³ gemessen in Anlehnung an DIN EN 1097-3 nach einer Trocknung bei Zimmertemperatur und ca. 50 % relative Luftfeuchtigkeit bis zur Gewichtskonstanz, loser Einfüllung in ein Messgefäß mit 1 Liter Inhalt und sorgfältigem Abstreichen des überstehendes Granulat, wobei das Leicht-Granulat mit einer mittels Leinöl hydrophobierten Oberfläche versehen sowie einem organischen Bindemittel zum Formkörper gebunden ist, wobei das organische Bindemittel ein 2-K-Polyurethan-Klebstoff ist, basierend auf
a) mindestens einem Polyhydroxy-Polyether des Molekulargewichtsbereiches von 60 bis 10000, vorzugsweise 70 bis 6000, mit 2 bis 10 Hydroxyl-Gruppen pro Molekül sowie auf
b) mindestens einem mehrwertigen aromatischen und/oder aliphatischen Isocyanat mit vorzugsweise im Mittel 2 bis höchstens 4 NCO-Gruppen pro Molekül.

Der Kern der Erfindung besteht im Wesentlichen darin, dass die Oberfläche von porösen Leicht-Granulaten so behandelt wird, dass das Bindemittel nicht in das poröse Leicht-Granulat eindringt und damit für seine eigentliche Aufgabe nicht mehr zur Verfügung steht, nämlich das Granulat zu binden. Es war nicht zu erwarten, dass dies durch Hydrophobierung mit einer hydrophoben Flüssigkeit, insbesondere mit einem Öl möglich ist, ohne dass dadurch die Festigkeit drastisch verringert wird. Denn zur Vorbereitung einer Verklebung gehört es an sich, die Oberflächen zu trocknen und fettfrei zu machen. Außerdem war zu befürchten, dass die Festigkeit verringert wird, weil die Oberfläche des Leicht-Granulats durch das Hydrophobiermittel egalisiert wird und damit die Verhakelung mit dem Klebstoff verringert oder gar ganz verhindert wird. Die Erfindung besteht also in einem offenporigen Formkörper auf der Basis von anorganischen Leicht-Granulaten mit hydrophobierter Oberfläche sowie organischen Bindemitteln.

Das Leicht-Granulat sollte möglichst rund also annähernd kugelförmig sein. Es hat eine unebene und zerklüftete Oberfläche, wie sie durch eine Sinterung herstellbar ist. Das Leicht-Granulat hat eine Korngröße zwischen 0,01 und 30 mm, vorzugsweise zwischen 0,04 und 16 mm und insbesondere bevorzugt zwischen 0,1 und 8 mm. Vorzugsweise enthält der Formkörper ein Leicht-Granulat aus einer einzigen oder auch aus zwei bis vier unterschiedlichen Korngrößengruppen, wobei jede Korngrößengruppe möglichst einheitlich ist. Die Korngröße wird bestimmt, indem man eine abgewogene Teilchenmenge mit einem Siebsatz mit Maschenweiten von 11, 8, 5, 4, 3, 2 und 1 mm siebt und die erhaltenen Fraktionen wiegt. Das Gewicht dieser Siebdurchgänge wird jeweils auf die Gesamtmenge bezogen und ergibt so den Anteil des jeweiligen Siebdurchganges in Gew.-%. Trägt man die Siebdurchgänge in Gew.-% in Abhängigkeit von der Maschenweite in mm auf, erhält man die Körnung in Form der Sieblinie. Verwendet man z. B. einen Siebsatz mit Maschenweiten von 5, 2, und 1 mm, so erhält man einzelne Fraktionen mit >5, 5-2, 2-1 und <1 mm. Wenn man 1000 g Teilchen siebt und 10, 500, 430 und 60 g schwere Fraktionen erhält, so ist der Siebdurchgang 1,0, 50,0, 43,0 und 6,0 Gew.-%, jeweils in der Reihenfolge der genannten Fraktionen. Bei den Untersuchungen wurden Teilchen eingesetzt, deren Korngröße durch Siebdurchgänge zwischen den angegeben Maschenweiten erhalten wurde.

Das Leicht-Granulat sollte eine Schütt-Dichte von 0,10 bis 0,60 kg/d_{M}³, vorzugsweise von 0,15 bis 0,35 kg/dm³ haben, gemessen in Anlehnung von DIN EN 1097-3. Dazu wird das Granulat nach einer Trocknung bei Zimmertemperatur (ca. 20 °C und ca. 50 % relative Luftfeuchtigkeit) bis zur Gewichtskonstanz in ein Messgefäß mit 1 Liter Inhalt lose eingefüllt und überstehendes Granulat sorgfältig abgestrichen. Eine Differenzwägung ergibt das Schüttgewicht als Quotient aus Gewicht und Volumen in kg/dm³.

Das Leicht-Granulat ist porös und teilweise offenporig, was einfach durch seine Wasseraufnahme nach DIN V 18004 bestimmt werden kann: Für Körnungen kleiner als 2 mm wird das Wasser in einer Filternutsche eingebracht und durch Absaugen mit einer Wasserstrahlpumpe die Oberfläche getrocknet. Für Körnungen größer als 2 mm wird das Wasser in einem Pyknometer eingebracht und die Oberfläche durch Abtupfen getrocknet. 100 g eines trockenen Leicht-Granulats sollten bis zu 40 g Wasser aufnehmen.

Die Herstellung eines Leicht-Granulates sei am Beispiel des Blähglasgranulates PORAVER^{®} der Dennert Poraver GmbH, Postbauer-Heng skizziert (s. auch DE 103 60 819 A1): Zunächst wird reines Glas zu feinem Glas-Mehl gemahlen. Das Glas-Mehl wird mit Wasser, Bindemittel und Blähmittel gemischt und die Mischung im Granulierteller in eine runde Form gebracht. Die kleinen Kügelchen werden getrocknet und in einem Drehofen auf ca. 900 °C erhitzt und dabei gebläht. Dadurch entsteht ein feinporiges Rundgranulat, das im Innern feine Luftkammern einschließt. Nach dem Abkühlen und Sieben erhält man ein verkaufsfertiges Leicht-Granulat gewünschter Körnung.

Das Leicht-Granulat wird hydrophobiert, d. h. mit einer hydrophoben Flüssigkeit so behandelt, dass seine für Wasser zugänglichen Poren verringert oder ganz beseitigt werden; zweckmäßigerweise wird es oberflächlich mit einem trocknenden Öl hydrophobiert, worunter in der Regel ein Glyzerin-Ester mit mehr als 20 % von ein- oder mehrfach ungesättigten Fettsäuren zu verstehen ist. Hydrophobierungsmittel ist Leinöl. Die Jodzahl der trocknenden oder halbtrocknenden Öle soll zweckmäßigerweise im Bereich von 100 bis 250 liegen. Zur Beschleunigung der Trocknung können Trockenstoffe zugesetzt werden, insbesondere Metallseifen.

Das Leicht-Granulat sollte mit einer solchen Menge an Hydrophobierungsmittel behandelt sein, dass nach einer Beschichtung mit Wasser deutlich weniger oder gar kein Wasser oberflächlich aufgenommen wird, wozu im Allgemeinen zweckmäßigerweise 1 bis 7, insbesondere ca. 5 Gew.-% an Hydrophobierungsmittel reichen. Zweckmäßigerweise wird das Hydrophobierungsmittel unmittelbar vor der Herstellung des Formkörpers eingesetzt. Es kann aber auch unabhängig davon schon deutlich früher auf das Leicht-Granulat aufgetragen werden, z. B. Wochen oder gar Monate vorher.

Eine bevorzugte Ausführungsform des beanspruchten Formkörpers ist dadurch gekennzeichnet, dass er herstellbar ist mit einem 2-Komponenten-Polyurethan-Klebstoff als organischem Bindemittel, wie er in der DE 10 2007 012 973 A1 beschrieben ist, auf die ausdrücklich Bezug genommen wird, vor allem auf den dort beschriebenen Klebstoff. Dieser Klebstoff hat im Allgemeinen folgende-Zusammensetzung:
- a) 10 bis 98 Gew.-% mindestens eines oleochemischen Polyols,
- b) 1 bis 50 Gew.-% mindestens eines Diols mit einem Molekulargewicht von 60 bis 2000 g/mol,
- c) 1 bis 10 Gew.-% mindestens eines drei-, vier- oder fünfwertigen Polyols mit einem Molekulargewicht von 90 bis750 g/mol sowie
- d) 0 bis 75 Gew.-% mindestens eines Hilfsstoffes, wobei die Gew.-% auf die Komponenten a) bis d) insgesamt bezogen sind und
- e) mindestens ein Polyisocyanat, wobei das NCO/OH-Verhältnis der Isocyanate zu den Polyolen 1,0 bis 2,0:1 beträgt.

Unter oleochemischen Polyolen versteht man Polyole auf Basis von pflanzlichen und tierischen Ölen und Fetten, auf deren Folgeprodukten sowie auf petrochemisch hergestellten äquivalenten Stoffen. Als eine wichtige Gruppe seien die Reaktionsprodukte von epoxidierten Fettstoffen mit mono-, di- oder polyfunktionellen Alkoholen oder Glycerinester langkettiger Fettsäuren genannt, die zumindest teilweise mit Hydroxyl-Gruppen substituiert sind. Beispiele für solche Verbindungen sind Ringöffnungsprodukte epoxidierter Triglyceride, Ringöffnungs- und Umesterungs-Produkte von epoxidierten Fettsäureestern niederer Alkohole, Umsetzungsprodukte epoxidierter Fettalkohole mit C₂ bis C₈-Alkoholen und vor allem Rizinusöl und Dimerdiole.

Die Hydroxylzahlen der oleochemischen Polyole können im Bereich von 50 bis 400 liegen, bevorzugt im Bereich von 100 bis 300. Als Diole können einzelne Substanzen oder Gemische eingesetzt werden. Die Diole haben ein Molekulargewicht zwischen 60 und 2000 g/mol. Es handelt sich vor allem um Alkandiole mit 2 bis 6 C-Atomen, wobei das Alkan linear, verzweigt oder cyclisch sein kann.

Der Klebstoff sollte außerdem mindestens ein drei- oder höherfimktionelles Polyol enthalten. Bevorzugt sind Polyole mit 3, 4 oder 5 OH-Gruppen, z. B. Glycerin, Trimethylolpropan und Trimethylolethan. Das Molekulargewicht soll zwischen 90 und 750 g/mol betragen, insbesondere bis zu 400.

Die Polyisocyanatkomponente enthält im Wesentlichen mindestens ein Polyisocyanat, vor allem die bekannten Di- und Polyisocyanate mit vorzugsweise im Mittel 2 bis höchstens 5, insbesondere 2 bis 3 NCO-Gruppen. Es können sowohl aromatische als auch aliphatische Polyisocyanate eingesetzt werden, z. B. Roh MDI oder Cyclohexan-1,4-diisocyanat. Das Verhältnis der Isocyanatgruppen zu den OH-Gruppen liegt im Bereich von 1,0:1 bis 2,0:1. Ein geringer Überschuss von Isocyanatgruppen ist bevorzugt. Insbesondere liegt das Verhältnis zwischen 1,02:1 und 1,8:1.

Der Klebstoff kann noch Hilfsstoffe enthalten, z. B. Füllstoffe, Verlaufmittel, Entlüfter, Thixotropiermittel, Katalysatoren, Alterungsschutzmittel, UV-Stabilisatoren, Farbstoffe, Lösemittel, Netzmittel, Trocknungsmittel und insbesondere ein Harz. Bei einem Harz handelt es sich um flüssige bis feste amorphe organische Produkte, für die eine mehr oder weniger breite Verteilung der relativen Molmasse charakteristisch ist. Konkrete Beispiele sind die synthetischen Harze: Kohlenwasserstoff-, Terpen-, Alkyd-, Cumaron/Inden-, Furan- Aldehyd-, Keton- sowie Glycerinester-Harze. Ihre Menge kann bis zu 60 % betragen, insbesondere 2,5 bis 40 Gew.-%, bezogen auf die Polyolkomponente insgesamt.

Als Mittel zur Trocknung der Polyolkomponente (Trocknungsmittel) eignen sich vor allem Molekularsiebe.

Besonders geeignet ist ein 2K-PU-Klebstoff folgender Zusammensetzung: Die Polyolkomponente wird aus folgenden Bestandteilen mit einem schnelllaufenden Rührer hergestellt und entgast:
31,5 Gew.-Teile an Ricinusöl,
8 Gew.-Teile eines trifunktionellen Polyetherpolyols (PPG Mₙ 450),
3,2 Gew.-Teile an Dipropylenglykol,
4,3 Gew.-Teile eines Molekularsiebes,
10 Gew.-Teile eines Cyclohexanon-Formaldehydharzes,
41 Gew.-Teile an Calciumcarbonat (Pulver) und,
2,0 Gew.-Teile an Aerosil R202.

Um den reaktiven Klebstoff zu erhalten, wird die Polyolkomponente gemischt mit 35,5 Gewichtsteilen an Roh- MDI. Der Klebstoff vernetzt bei üblichen Umgebungsbedingungen (ca. 20 °C und ca. 50 % relative Luftfeuchtigkeit), aber auch bei erhöhter Temperatur und Luftfeuchtigkeit, z. B. bei 45 °C und 100 % relativer Luftfeuchtigkeit.

Ein handelsüblicher 2-K-PU-Klebstoff ist z. B. das System UK 8614/CR 4300 der Henkel KGaA.

Das organische Bindemittel ist im Formkörper mit weniger als 50 Gew.-%, insbesondere im Bereich von 5 bis 20 Gew.-% und ganz besonders von 7 bis 13 Gew.-% enthalten, bezogen auf das Granulat.

Der Formkörper enthält gegebenenfalls in speziellen Fällen als weitere Komponente eine Armierung, insbesondere kurz- oder langfaserige Verstärkungsfasern, Gewebegitter und Vliese, vor allem aus Glas, sei es im Innern oder auf einer oder beiden Seiten. Jedoch ist wegen der hohen Festigkeit in der Regel keine Armierung notwendig, insbesondere bei hoher Dicke. Ein Trägermaterial, z. B. ein grobporöser PU-Schaum, für das Leicht-Granulat ist ebenfalls nicht notwendig.

Die Dichte des Formkörpers liegt unter 1000 kg/m³, vorzugsweise unter 400 kg/m³ und insbesondere unter 300 kg/m³, vorzugsweise im Bereich von 200 bis 400 kg/m³. Sie wird bestimmt durch Wiegen und Ausmessen der Höhe, der Breite und der Tiefe eines Quaders.

Der Formkörper hat ein Stauvolumen im Bereich von 20 bis 70 %, insbesondere im Bereich von 40 bis 60, und ganz besonders um 50 %. Das Stauvolumen wurde bestimmt, indem man einen Prüfkörper mit einem genau ausgemessenen Volumen, insbesondere mit einer Länge, Breite und Höhe von jeweils 70 mm (also 343 cm³) in ein genau definiertes Volumen von 1000 cm³ an Leitungs-Wasser von 20 °C stellt. Nach 10 Minuten wurde der Volumenzuwachs in ml gemessen. Bezieht man den ermittelten Volumenzuwachs auf das Ausgangsvolumen des Prüfkörpers, erhält man das Stauvolumen in Vol.-%. Ist z. B. das Ausgangsvolumen 343 cm³ und der Volumenzuwachs 213 cm³ errechnet sich das Stauvolumen, indem man (343-213) mit 100 multipliziert und durch 343 dividiert. So erhält man 40,6 Vol.-%.

Der Formkörper hat eine Wasserdurchlässigkeit zwischen 500 bis 3000 dm³/(min m²), insbesondere zwischen 800 bis 2400 dm³/(min m²) bei einer Schichtdicke von 5 cm. Die Wasserdurchlässigkeit wurde bestimmt, indem man die Menge des bei 20 °C durchgelaufenen Wassers in Liter auf die Zeit in Minuten und die Oberfläche der Probe in m² bezieht. So ergibt sich die Durchflussmenge in Liter pro m² und Minute für die jeweilige Platte mit deren spezifischer Dicke.

Trotz der extrem niedrigen Dichte hat der Formkörper eine hohe Festigkeit, z. B. eine hohe Druckfestigkeit, insbesondere aber eine hohe Biegefestigkeit (MOR, most of rupture) von bis zu 3,0 N/mm², insbesondere von 0,5 bis 1,5 N/mm² nach DIN EN 310.

Der Formkörper ist gewünschtenfalls partiell oder vollflächig, sei es einseitig oder allseits auf seiner Oberfläche mit einem anderen Material versehen, z. B. mit einer Sperrholzplatte, Spanplatte, Grobspanplatten (auch OSB-Platten), Hanfplatte, mit Mehrschichtsperrholz, Faserzement-Schicht, einer HPL-Platte (High Pressure Laminate), einer CPL-Platte (Continuous Pressure Laminate), einer HDF-Platte (hochdichten Faserplatte) einer MDF-Platte (mitteldichten Faserplatte), insbesondere aber mit einem flexiblen Laminierstoff wie Textil oder Papier und/oder einer Folie bzw. Blech auf der Basis eines organischen oder anorganischen Materials wie Melaminharz oder Aluminium. Besonders empfehlenswert ist es, mindestens eine mindestens 1 mm, insbesondere eine 1 bis 2 mm dicke Silikatputzschicht mit einer Körnung von 0,5 bis 2,0 mm aufzutragen, z. B. aus dem nicht-brennbaren Putz 260 der Fa. Weber in Wülfrath, womit der Formkörper schwerentflammbar gemäß DIN 4102 B 1 wird. Die Schwerentflammbarkeit kann noch verbessert werden durch den Zusatz von flüssigen Flammschutzmitteln zum Klebstoff und/oder dem Leichtgranulat, insbesondere durch halogenierte Phosphorsäureester wie z. B. Tris(chlorpropyl)phosphat (TCPP), Tris(dichlorisopropyl)phosphat (TDPP) oder das Antiblaze TMCP der Fa. Albemarle Corporation. Der Formkörper hat vorzugsweise eine geometrische Form, sei es die eines kompakten Körpers wie Platten, Balken und Blöcken oder sei es eines Hohlkörpers wie Rohre und Tröge.

Die erfindungsgemäßen Formkörper werden nach in ihrem Grundkonzept an sich bekannten Verfahren hergestellt. Entscheidend aber ist der neue Verfahrenschritt der Hydrophobierung. Auch dieses Verfahren ist in anderem Zusammenhang bekannt, z. B. in der Anstrichtechnik. Im Allgemeinen lassen sich die erfindungsgemäßen Formkörper herstellen, indem
a) das anorganische Leicht-Granulat in Form von Blähglas mit Leinöl hydrophobiert wird,
b) das hydrophobierte Leicht-Granulat in Form von Blähglas mit dem organischen Bindemittel in Form eines 2-K-Polyurethan-Klebstoff, basierend auf mindestens einem Polyhydroxy-Polyether des Molekulargewichtsbereiches von 60 bis 10000, vorzugsweise 70 bis 6000, mit 2 bis 10 Hydroxyl-Gruppen pro Molekül sowie auf mindestens einem mehrwertigen aromatischen und/oder aliphatischen Isocyanat mit vorzugsweise im Mittel 2 bis höchstens 4 NCO-Gruppen pro Molekül, vorzugsweise mit diesem Bindemittel-Gemisch oder mit den einzelnen Komponenten dieses organischen Bindemittels sowie gegebenenfalls mit Hilfsstoffen gemischt wird,
c) das Granulat/Bindemittel-Gemisch geformt und verdichtet wird,
d) das verdichtete Granulat/Bindemittel gehärtet und
e) das gehärtete Granulat/Bindemittel entformt wird.

Die Isocyanate werden üblicherweise mit einem bis zu 30%igem, vorzugsweise mit einem 10 bis 25%igem Überschuss an Isocyanat bezogen auf das Polyol eingesetzt.

Vorzugsweise mischt man die einzelnen Komponenten des organischen Bindemittels dem hydrophobierten Granulat zu, und zwar in folgender Reihenfolge: Polyole, Polyisocyanate oder Polyepoxide und Hilfsstoffe.

Besonders günstig für die Benetzung ist es, wenn das organische Bindemittel eine Viskosität von 1000 bis 20 000 mPas bei der Applikationstemperatur, bevorzugt bei 15 bis 50 °C hat, gemessen nach EN ISO 2555. Dann verhindert man vor allem, dass sich das Bindemittel am Boden der Form anreichert.

Es ist empfehlenswert, nicht nur das Leicht-Granulat untereinander mit dem Klebstoff zu binden, sondern auch gleichzeitig mit dem Laminierstoff, z. B. mit Textilien (z. B. mit Glasfaser-Vliesen und/oder mit Glasfaser-Gittergewebe) oder Folien, Blechen, indem man die Formen mit den Laminierstoffen auskleidet, insbesondere oben, unten und/oder mittig. Die Laminierstoffe müssen mit dem Bindemittel in einer Menge von 50 bis 300 g/m² beschichtet sein, zweckmäßig mit demselben Bindemittel wie zum Binden des Leicht-Granulats.

Es ist am einfachsten, die gewünschten Formkörper in einem diskontinuierlichen Produktionsprozess zu erhalten, wenn man das Gemisch aus Granulat und Bindemittel in nicht-geschlossene Formen gibt und das gleichmäßige Einfüllen durch Rütteln, Vibration und/oder Druck unterstützt, wobei der Druck vorzugsweise mit Walzen unter Verwendung von für PU-Klebstoffe handelsüblichen Trennmitteln ausgeübt wird. Möglich ist auch, Waschbenzin im Gemisch mit Ölen -z. B. mit Leinöl - als Antihaftmittel zu verwenden.

Es ist zweckmäßig, das auf Distanz geformte und verdichtete Granulat/Bindemittel-Gemisch in einer Einzelpresse, einer Multipresse oder einer kontinuierlichen Presse zu härten, insbesondere in einer Doppelbandpresse.

Im Allgemeinen härtet man das verdichtete Granulat/Bindemittel in offenen Formen unter einem Druck von 1 bis 40 MPa in einem TemperaturBereich von mehr als 0 und weniger als 100 °C, insbesondere im Bereich von 5 bis 60 °C in 5 Minuten bis 3 Tagen, insbesondere in 2 bis 3 Minuten, bis es handhabbar ist, vorzugsweise härtet man es aus.

In besonders rationeller Weise ist gemäß einer bevorzugten Verfahrensvariante vorgesehen, den Formkörper in einem kontinuierlichen Prozess herzustellen. Dazu wird in einer Mischvorrichtung, wie vorzugsweise einem Mischextruder, sukzessive das Leichtgranulat zur Hydrophobierung mit dem Hydrophobiermittel vermischt, anschließend das organische Bindemittel oder Bindemittelgemisch zugeführt und das Granulat/Bindemittelgemisch kontinuierlich zur Formgebung und Verdichtung in einer kontinuierlichen Presse gepresst. Dazu kann die oben erwähnte Doppelbandpresse verwendet werden. Der so hergestellte Strang kann gehärtet und anschließend zu den einzelnen Formkörpern vereinzelt werden.

Eine Heißhärtung ist empfehlenswert, wenn es darum geht, den Klebstoffzusatz zu verringern, ohne dass die Festigkeit darunter leidet. Weiterhin wird dadurch die Produktivität gesteigert, und zwar sowohl bei der kontinuierlichen als auch bei der diskontinuierlichen Herstellung. Bei der Heißhärtung liegt die Pressen-Temperatur im Bereich von mehr als 60 °C bis zu 250 °C, vorzugsweise im Bereich von 150 bis 250 °C. Sie dauert bei Temperaturen von mehr als 60 bis 250 °C etwa 4 Stunden bis etwa 2 Minuten und bei Temperaturen zwischen 150 und 200 °C etwa 10 Minuten bis 4 Minuten. Diese quantitativen Angaben gelten für einen 2-K-PU-Klebstoff mit einer Reaktivität, wie sie in einer Topfzeit von etwa 2 bis etwa 30 Minuten bei Raumtemperatur, vorzugsweise 4, 5 oder 6 Minuten, zum Ausdruck kommt.

Es ist kostengünstig, wenn man das gehärtete Granulat/Bindemittel-Gemisch ohne abzukühlen entformt und danach erst ganz aushärtet. Gewünschtenfalls kann man auf den gehärteten Formkörper noch einen Silikat-Feinputz auftragen, zweckmäßigerweise in 1 bis 2 mm Schichtstärke auf mindestens einer Seite.

Die erfindungsgemäßen Formkörper zeichnen sich gegenüber Formkörpern ohne Hydrophobierung der Leicht-Granulate durch bedeutsame Eigenschaften aus:
- Es kann deutlich weniger Klebstoff verwendet werden, ohne dass dadurch die Festigkeit leidet. Im Beispiel wurden nur 11 Gew.-% bzw. nur 2 Vol.-% an Klebstoff zugesetzt. Wahrscheinlich wird der Klebstoff zum Teil von dem porösen Leicht-Granulat in sein Inneres aufgesaugt, wo er nicht nur nutzlos, sondern auch schädlich ist, z. B. bezüglich Stauvolumen und Dichte.
- Die Dichte des Formkörpers liegt knapp über dem Schüttgewicht des Leichtgranulates.
- Die Porosität bleibt als weitgehend erhalten und damit das Stauvolumen und die Wasserdurchlässigkeit.
- Mit dem deutlich geringeren Klebstoffanteil gehen niedrigere Kosten einher.
- Der geringe Klebstoffanteil ist Basis für die Flammwidrigkeit.
- Trotz des geringen Klebstoffanteils bleibt die Festigkeit der Formkörper auf dem gleichem Niveau wie die der Formkörper aus nicht-hydrophobiertem Leicht-Granulat. So ist die Verklebung so fest, dass zu 100 % Kohäsionsbruch im Blähglas erfolgte.

Wegen der vielen positiven Eigenschaften sind die erfindungsgemäßen Formkörper auch vielseitig anwendbar, z. B. als Akustikplatten, insbesondere wenn sie mit Silikatputz beschichtet sind, als Möbelplatten, insbesondere für Arbeitsplatten, als Platten für elektrische Geräte wie Kühlschränke, als Türfüllung und zur Herstellung von diversen Sandwichelementen sowie zum Schallschutz.

Im Folgenden wird die Erfindung im Einzelnen beschrieben durch

### Ausführungsbeispiele:

I. Hydrophobierung mit Leinöl
A) Ausgangsprodukte zur Herstellung von Platten mit einer Dicke von 40 mm:
   a) Leicht-Granulat: Rundgranulat aus Blähglas PORAVER® der Firma Dennert Poraver GmbH mit einer Körnung von 4 bis 8 mm,
   b) Hydrophobierungsmittel: Leinöl,
   c) Bindemittel: 2-K-PU-Klebstoff Macroplast UK 8614 und Härter CR 4300 der Fa. Henkel.
B) Herstellung der Platten:
   a) Die in der folgenden Tabelle 1 angegebenen Mengen an Leinöl wurden in die angegeben Mengen an Leicht-Granulat eingerührt, und zwar mit einem Flügelrührer mit 250 UpM innerhalb von 5 Minuten bei Raumtemperatur.
   b) 100 Gewichtsteile Macroplast UK 8614 und 38 Gewichtsteile Härter CR 4300 wurden homogen gemischt und diese Klebstoff-Mischungen in den angegebenen Mengen dem hydrophobierten Leichtgranulat zugemischt, und zwar mit einem Flügelmischer mit 250 UpM innerhalb von 5 Minuten bei Raumtemperatur.
   c) Diese Mischung aus Leicht-Granulat, Leinöl und Klebstoff wurde in eine Form mit den Dimensionen 400x400x40 mm einfüllt, sodass 5 mm über der Formhöhe überstanden, und anschließend mit einer Deckplatte unter geringem Druck von 0,5 kg/cm² verdichtet.
   d) Nach der Aushärtung in 24 Stunden bei 20 °C wurde die Platte entformt.
C) Untersuchung der Platten:
   Die Patte nach Beispiel 1 gemäß Tabelle 1 ist erfindungsgemäß, die nach Beispiel 2 nicht. Die Dichte wurde durch Wiegen und Ausmessen eines Quaders bestimmt. Sie und die Biegefestigkeit sind für die erfindungsgemäße und nicht erfindungsgemäße Platte praktisch gleich, sogar eher besser bei der erfindungsgemäßen Platte.
D) Ergebnis: Trotz Erhöhung der Klebstoffmenge um 50 % von 200 auf 300 g wurde die Festigkeit nicht erhöht. D. h., durch Hydrophobierung mit Leinöl kann der Klebstoffgehalt deutlich verringert werden, ohne dass sich das Festigkeitsniveau verschlechtert. Damit werden die Kosten für die Ausgangsstoffe deutlich verringert, da Leinöl deutlich billiger als das Bindemittel ist.

**Tabelle 1**

| | Beispiel 1 | | Beispiel 2 | |
|---|---|---|---|---|
| Ausgangsstoffe | Menge in g | Gew.-% | Men ge in g | Gew.-% |
| Leicht-Granulat | 1500 | 84,5 | 1500 | 83,3 |
| Leinöl | 75 | 4,2 | 0 | 0 |
| Bindmittel | 200 | 11,3 | 300 | 16,7 |
| Gesamtmenge | 1775 | 100 | 1800 | 100 |
| Eigenschaften | | | | |
| Dichte | 225 kg/m³ | | 230 kg/m³ | |
| Biegefestigkeit | 0,49 N/mm¹ | | 0,47 N/mm² | |

II. Formkörper mit geringer Menge an Bindemittel und mit ausgehärtetem Leinöl
A) Ausgangsprodukte zur Herstellung von Platten:
   Wie im Beispiel I mit den Mengenangaben in der folgenden Tabelle 2. 7 Gew.-% an Bindemittel-Zusatz bedeuten 1,4 Vol.-% Bindemittel in der Platte.
B) Herstellung der Platten:
   Analog zur Herstellung im Beispiel I.
   Das Leinöl wurde entweder unmittelbar vor dem Bindemittel oder 12 Monaten vorher dem Leicht-Granulat zugemischt und dann bei üblichen Raumbedingungen gelagert. (nicht erfindungsgemäß)
C) Untersuchung der Platten
   Die Platte nach Beispiel 3 ist nicht erfindungsgemäß, die nach Beispiel 4a), b) und c) sind erfindungsgemäß. Wie man der Tabelle 2 entnehmen kann, sind die Dichten mit ca. 225 kg/m³ praktisch gleich. Die Biegefestigkeit der erfindungsgemäßen Platten lagen mit 0,28, 0,34 und 0,44 N/mm² deutlich über der der nicht erfindungsgemäßen mit 0,17 N/mm².
D) Ergebnis:
   Trotz Verringerung der Klebstoffmenge von 15 auf 7 Gew.-% -siehe Beispiel 4c) und 4a) - wurde eine sehr gute Biegefestigkeit erreicht. Das hat nicht nur eine Verringerung der Plattenkosten zur Folge, sondern lässt auch eine bessere Flammwidrigkeit erwarten. Der Vergleich von Beispiel 4a) und 4b) zeigt, dass auch eine vorhergehende Aushärtung des Leinöls möglich ist.

**Tabelle 2**

| | Beispiel 3* | Beispiel 4a | Beispiel 4b | Beispiel 4c |
|---|---|---|---|---|
| Ausgangsstoffe | | | | |
| Leinöl | 0 Gew.-% | 4 Gew.-% | 4 Gew.-% 1 Jahr gelagert | 4 Gew.-% |
| Bindmittel | 7 | 7 | 7 | 15 |
| Leichtgranulat | 93 | 89 | 89 | 81 |
| Gesamtmenge | 100 | 100 | 100 | 100 |
| Eigenschaften | | | | |
| Dichte | 223 kg/m³ | 225 kg/m³ | 226 kg/m³ | 225 kg/m³ |
| Biegefestigkeit | 0,17 N/mm² | 0,34 N/mm² | 0,28 N/mm¹ | 0,44 N/mm² |

| | | | | |
|---|---|---|---|---|
| * nicht erfindungsgemäß | | | | |

III. Einfluss der Heißhärtung
Es wurden 40 mm dicke Platten analog zum Beispiel I mit den Herstellungsbedingungen und den Eigenschaften gemäß der folgenden Tabelle 3 aus dem im Beispiel I angegebenen Leicht-Granulat und Bindemittel hergestellt. Es wurde die Pressen-Temperatur angegeben.
Die Untersuchungen zeigen, dass bei der Heißhärtung Platten mit höherer Festigkeit trotz niedrigerem Klebstoffanteil in wesentlich kürzerer Zeit erhalten wurden.

**Tabelle 3**

| | Beispiel 5 | Beispiel 6 |
|---|---|---|
| Herstellung | | |
| Gewichtsanteil vom 2-K-PU-Klebstoff in % | 15 | 10 |
| Aushärtung bei °C | RT | 200 |
| Aushärtungsdauer | 24 Stunden | 4 Minuten |
| Eigenschaften | | |
| Dichte | 225 kg/m³ | 222 kg/m³ |
| Biegefestigkeit | 0,44 N/mm¹ | 0,51 N/mm¹ |

## Patentansprüche

1. Offenporiger Formkörper auf der Basis von anorganischen, teilweise offenporigen, annähernd kugelförmigen Leicht-Granulaten bestehend aus Blähglas, sowie mit einer Schüttdichte von 0,10 bis 0,60 kg/dm³ gemessen in Anlehnung an DIN EN 1097-3 nach einer Trocknung bei Zimmertemperatur und ca. 50 % relative Luftfeuchtigkeit bis zur Gewichtskonstanz, loser Einfüllung in ein Messgefäß mit 1 Liter Inhalt und sorgfältigem Abstreichen des überstehendes Granulat, wobei das Leicht-Granulat mit einer mittels Leinöl hydrophobierten Oberfläche versehen sowie einem organischen Bindemittel zum Formkörper gebunden ist, wobei das organische Bindemittel ein 2-K-Polyurethan-Klebstoff ist, basierend auf
a) mindestens einem Polyhydroxy-Polyether des Molekulargewichtsbereiches von 60 bis 10000, vorzugsweise 70 bis 6000, mit 2 bis 10 Hydroxyl-Gruppen pro Molekül sowie auf
b) mindestens einem mehrwertigen aromatischen und/oder aliphatischen Isocyanat mit vorzugsweise im Mittel 2 bis höchstens 4 NCO-Gruppen pro Molekül.

2. Formkörper nach Anspruch 1, **dadurch gekennzeichnet, dass** das Leicht-Granulat eine Korngröße zwischen 0,01 und 30 mm, vorzugsweise zwischen 0,04 und 16 mm und insbesondere bevorzugt zwischen 0,2 und 8 mm.

3. Formkörper nach Anspruch 1, **dadurch gekennzeichnet, dass** das Leicht-Granulat eine nach Anspruch 1 gemessene Schüttdichte von 0,15 bis 0,35 kg/dm³ hat.

4. Formkörper nach einem der Ansprüche 1 bis 3, **dadurch gekennzeichnet, dass** der 2-Komponenten-Polyurethan-Klebstoff als organisches Bindemittel folgende Zusammensetzung aufweist:
- a) 10 bis 98 Gew.-% mindestens eines oleochemischen Polyols,
- b) 1 bis 50 Gew.-% mindestens eines Diols mit einem Molekulargewicht von 60 bis 2000 g/mol,
- c) 1 bis 10 Gew.-% mindestens eines drei-, vier- oder fünfwertigen Polyols mit einem Molekulargewicht von 90 bis750 g/mol,
- d) 0 bis 75 Gew.-% an Hilfsstoffen, wobei die Gew.-% sich auf die Komponenten a bis d insgesamt bezogen sind, und
- e) mindestens ein Polyisocyanat, wobei das NCO/OH-Verhältnis der Isocyanate zu den Polyolen 1,0 bis 2,0:1 beträgt.

5. Formkörper nach einem der Ansprüche 1 bis 4, **dadurch gekennzeichnet, dass** das organische Bindemittel im Formkörper mit weniger als 50 Gew.-%, insbesondere im Bereich von 5 bis 20 Gew.-% und ganz besonders mit 8 bis 13 Gew.-% bezogen auf das Granulat enthalten ist.

6. Formkörper nach einem der Ansprüche 1 bis 5, **dadurch gekennzeichnet, dass** er partiell oder vollflächig, einseitig oder allseitig auf seiner Oberfläche mit einem anderen Material versehen ist, insbesondere mit einer Faserzement-Schicht, einer HPL-Platte (High Pressure Laminate), einer CPL-Platte (Continuous Pressure Laminate), einer HDF-Platte (hochdichten Faserplatte), einer MDF-Platte (mitteldichten Faserplatte), einem flexiblen Laminierstoff wie Textil oder Papier und/oder mit einer Folie bzw. mit einem Blech auf der Basis eines organischen Kunststoffes, wie Melaminharz und/oder mit einem anorganischen Material, wie Silikat-Feinputz oder Aluminium.

7. Formkörper nach einem der Ansprüche 1 bis 6, **dadurch gekennzeichnet, dass** er ein Stauvolumen im Bereich von 20 bis 70 %, insbesondere im Bereich von 40 bis 60, und ganz besonders um 50 % hat.

8. Formkörper nach einem der Ansprüche 1 bis 7, **dadurch gekennzeichnet, dass** er zusätzlich ein Flammschutzmittel enthält, insbesondere eine Verbindung mit Phosphor und Chlor.

9. Verfahren zur Herstellung der Formkörper nach mindestens einem der Ansprüche 1 bis 8, **dadurch gekennzeichnet, dass**
a) das anorganische Leicht-Granulat in Form von Blähglas mit Leinöl hydrophobiert wird,
b) das hydrophobierte Leicht-Granulat in Form von Blähglas mit dem organischen Bindemittel in Form eines 2-K-Polyurethan-Klebstoff, basierend auf mindestens einem Polyhydroxy-Polyether des Molekulargewichtsbereiches von 60 bis 10000, vorzugsweise 70 bis 6000, mit 2 bis 10 Hydroxyl-Gruppen pro Molekül sowie auf mindestens einem mehrwertigen aromatischen und/oder aliphatischen Isocyanat mit vorzugsweise im Mittel 2 bis höchstens 4 NCO-Gruppen pro Molekül, vorzugsweise mit diesem Bindemittel-Gemisch oder mit den einzelnen Komponenten dieses organischen Bindemittels sowie gegebenenfalls mit Hilfsstoffen gemischt wird,
c) das Granulat/Bindemittel-Gemisch geformt und verdichtet wird,
d) das verdichtete Granulat/Bindemittel gehärtet und
e) das gehärtete Granulat/Bindemittel entformt wird.

10. Verfahren nach Anspruch 9, **dadurch gekennzeichnet, dass** die einzelnen Komponenten des organischen Bindemittels dem hydrophobierten Granulat zugemischt werden, und zwar in folgender Reihenfolge: Polyole, Polyisocyanate und Hilfsstoffe.

11. Verfahren nach Anspruch 9 oder 10, **dadurch gekennzeichnet, dass** das organische Bindemittel eine Viskosität von 1000 bis 20 000 mPas bei der Applikationstemperatur, bevorzugt bei 15 bis 50 °C hat, gemessen nach EN ISO 2555 aufweist.

12. Verfahren nach einem der Ansprüche 9 bis 11, **dadurch gekennzeichnet, dass** man das Granulat/Bindemittel-Gemisch in nicht-geschlossene Formen gibt und das gleichmäßige Einfüllen durch Rütteln, Vibration und/oder Druck unterstützt, wobei der Druck vorzugsweise mit Walzen unter Verwendung von handelsüblichen Trennmitteln für PU-Klebstoffe ausgeübt wird.

13. Verfahren nach einem der Ansprüche 9 bis 12, **dadurch gekennzeichnet, dass** in einer Mischvorrichtung, vorzugsweise einem Mischextruder, sukzessive das Leicht-Granulat zur Hydrophobierung mit dem Hydrophobiermittel vermischt, anschließend das organische Bindemittel zugeführt und das Granulat/Bindemittel-Gemisch kontinuierlich zur Formgebung und Verdichtung in einer kontinuierlichen Presse gepresst wird.

14. Verfahren nach einem der Ansprüche 9 bis 13, **dadurch gekennzeichnet, dass** die Aushärtung entweder ohne Erwärmung bei Raumtemperatur oder oberhalb von 60 und bis zu 250 °C Pressen-Temperatur erfolgt.

## Claims

1. Open-pore mould based on inorganic, partially open-pore, roughly spherical light granulates consisting of foam glass and having a bulk density of 0.10 to 0.60kg/dm³, measured according to DIN EN 1097-3, after drying at room temperature and at approximately 50% relative air moisture up to weight constancy, loose filling into a measuring vessel with a content of 1 litre, and careful wiping off of the remaining granulate, wherein the light granulate is provided with a surface that is hydrophobised by means of linseed oil and is combined with an organic binding agent to create a mould, wherein the organic binding agent is a 2-component polyurethane adhesive based on
a) at least one polyhydroxy polyether in the molecular weight range of 60 to 10,000, preferably 70 to 6,000, with 2 to 10 hydroxyl groups per molecule, and
b) at least one polyvalent aromatic and/or aliphatic isocyanate with preferably, on average, 2 to a maximum of 4 NCO groups per molecule.

2. Mould according to claim 1, **characterised in that** the light granulate has a grain size of between 0.01 and 30mm, preferably between 0.04 and 16mm and particularly preferably between 0.2 and 8mm.

3. Mould according to claim 1, **characterised in that** the light granulate has a bulk density, measured according to claim 1, of 0.15 to 0.35kg/dm³.

4. Mould according to one of claims 1 to 3, **characterised in that** the 2-component polyurethane adhesive as the organic binding agent has the following composition:
- a) 10 to 98% b.w. of at least one oleochemical polyol,
- b) 1 to 50% b.w. of at least one diol having a molecular weight of 60 to 2,000 g/mol,
- c) 1 to 10% b.w. of at least one trivalent, tetravalent or pentavalent polyol having a molecular weight of 90 to 750g/mol,
- d) 0 to 75% b.w. of excipients, wherein the % b.w. relates to components a to d all together, and
- e) at least one polyisocyanate, wherein the NCO/OH ratio of isocyanates to polyols is 1.0 to 2.0 : 1.

5. Mould according to one of claims 1 to 4, **characterised in that** the organic binding agent is contained in the mould with less than 50% b.w., in particular in the range of 5 to 20% b.w. and particularly preferably with 8 to 13% b.w. with respect to the granulate.

6. Mould according to one of claims 1 to 5, **characterised in that** it is provided with another material on its surface, partially or fully, on one side or on all sides, in particular provided with a fibre cement layer, an HPL plate (high-pressure laminate), a CPL plate (continuous pressure laminate), an HDF pate (high-density fibre plate), an MDF plate (medium-density fibre plate), a flexible laminating agent such as textiles or paper and/or with a film or a sheet based on an organic plastic, such as melamine resin and/or with an inorganic material such as silicate fine plaster or aluminium.

7. Mould according to one of claims 1 to 6, **characterised in that** it has a storage volume ranging from 20 to 70%, in particular ranging from 40 to 60% and particularly preferably of 50%.

8. Mould according to one of claims 1 to 7, **characterised in that** it additionally contains a flame retardant, in particular a compound with phosphorous and chlorine.

9. Method for the production of the mould according to at least one of claims 1 to 8, **characterised in that,**
a) the inorganic light granulate in the form of foam glass is hydrophobised with linseed oil,
b) the hydrophobised light granulate in the form of foam glass is mixed with the organic binding agent in the form of a 2-component polyurethane adhesive based on at least one polyhydroxy polyether with a molecular weight range of 60 to 10,000, preferably 70 to 6,000, with 2 to 10 hydroxyl groups per molecule, and based on at least one polyvalent aromatic and/or aliphatic isocyanate with preferably, on average, 2 to a maximum of 4 NCO groups per molecule, preferably mixed with this binding agent mixture or with the individual components of this organic binding agent as well as, optionally, with excipients,
c) the granulate/binding agent mixture is moulded and compressed,
d) the compressed granulate/binding agent is cured, and
e) the cured granulate/binding agent is demoulded.

10. Method according to claim 9, **characterised in that** the individual components of the organic binding agent are mixed with the hydrophobised granulate, and indeed in the following sequence: polyols, polyisocyanates and excipients.

11. Method according to claim 9 or 10, **characterised in that** the organic binding agent has a viscosity of 1,000 to 20,000 mPas at the application temperature, preferably at 15 to 50°C, measured in accordance with EN ISO 2555.

12. Method according to one of claims 9 to 11, **characterised in that** the granulate/binding agent mixture is obtained in open moulds and even filling is supported by shaking, vibration and/or pressure, wherein the pressure is preferably exerted with rollers using commercially available separating agents for PU adhesives.

13. Method according to one of claims 9 to 12, **characterised in that,** in a mixing device, preferably a mixing extruder, the light granulate is successively mixed with the hydrophobising agent for hydrophobising, then the organic binding agent is added and the granulate/binding agent mixture is continuously pressed in a continuous press for moulding and compression.

14. Method according to one of claims 9 to 13, **characterised in that** the curing takes place either without heating at room temperature or at over 60 and up to 250°C pressing temperature.

## Revendications

1. Corps moulé à pores ouverts à base de granulés légers inorganiques, partiellement à pores ouverts, de forme approximativement sphérique constitués de verre expansé, ainsi qu'avec une masse volumique apparente de 0,10 à 0,60 kg/dm³ mesurée conformément à DIN EN 1097-3 après un séchage à température ambiante et une humidité relative de l'air d'environ 50 % jusqu'à un poids constant, une introduction lâche dans un récipient de mesure avec un contenu de 1 litre et une peinture minutieuse du granulat débordant, le granulat léger étant muni d'une surface rendue hydrophobe à l'aide d'huile de lin et étant lié avec un liant inorganique en un corps moulé, le liant organique étant une colle de polyuréthane 2-K, à base de
a) au moins un polyhydroxy-polyéther du domaine de masse moléculaire de 60 à 10 000, de préférence de 70 à 6 000, avec de 2 à 10 groupes hydroxyle par molécule ainsi que
b) au moins un isocyanate aromatique et/ou aliphatique polyvalent avec en moyenne de préférence de 2 à au plus 4 groupes NCO par molécule.

2. Corps moulé selon la revendication 1, **caractérisé en ce que** le granulat léger présente une taille de grain entre 0,01 et 30 mm, de préférence entre 0,04 et 16 mm et bien mieux encore entre 0,2 et 8 mm.

3. Corps moulé selon la revendication 1, **caractérisé en ce que** le granulat léger présente une masse volumique apparente mesurée selon la revendication 1 de 0,15 à 0,35 kg/dm³.

4. Corps moulé selon l'une quelconque des revendications 1 à 3, **caractérisé en ce que** la colle de polyuréthane à deux constituants présente la composition suivante comme liant organique :
- a) de 10 à 98 % en masse d'au moins un polyol oléochimique,
- b) de 1 à 50 % en masse d'au moins un diol avec une masse moléculaire de 60 à 2 000 g/mol,
- c) de 1 à 10 % en masse d'au moins un polyol tri-, tétra- ou pentavalent avec une masse moléculaire de 90 à 750 g/mol,
- d) de 0 à 75 % en masse d'auxiliaires, les % en masse étant rapportés au total des constituants a à d, et
- e) au moins un polyisocyanate, le rapport NCO/OH de l'isocyanate aux polyols étant de 1,0 à 2,0:1.

5. Corps moulé selon l'une quelconque des revendications 1 à 4, **caractérisé en ce que** le liant organique est contenu dans le corps moulé avec moins de 50 % en masse, en particulier dans un domaine de 5 à 20 % en masse et encore mieux de 8 à 13 % en masse rapporté au granulé.

6. Corps moulé selon l'une quelconque des revendications 1 à 5, **caractérisé en ce qu'**il est muni partiellement ou totalement, sur un côté ou sur les deux côtés de sa surface d'un autre matériau, en particulier d'une couche de fibrociment, une plaque HPL (High Pressure Laminate), une plaque CPL (Continuous Pressure Laminate), une plaque HDF (plaque de fibres de haute densité), une plaque MDF (plaque de fibres de densité moyenne), d'une matière stratifiée flexible ainsi que de textile ou de papier et/ou d'une feuille respectivement d'une tôle à base d'une matière plastique organique, comme une résine de mélamine et/ou un matériau inorganique, comme un plâtre à parement de silicate ou l'aluminium.

7. Corps moulé selon l'une quelconque des revendications 1 à 6, **caractérisé en ce qu'**il présente un volume de rangement dans un domaine de 20 à 70 %, en particulier dans un domaine de 40 à 60, et encore mieux aux environs de 50 %.

8. Corps moulé selon l'une quelconque des revendications 1 à 7, **caractérisé en ce qu'**il contient de plus un agent ignifuge, en particulier un composé avec du phosphore et du chlore.

9. Procédé pour la préparation du corps moulé selon l'une quelconque des revendications 1 à 8, **caractérisé en ce que**
a) le granulé léger inorganique est rendu hydrophobe dans la forme de verre expansé avec de l'huile de lin,
b) le granulé léger rendu hydrophobe dans la forme de verre expansé est mélangé avec le liant organique dans la forme d'une colle de polyuréthane 2-K, à base d'au moins un polyhydroxy-polyéther du domaine de masse moléculaire de 60 à 10 000, de préférence de 70 à 6 000, avec de 2 à 10 groupes hydroxyle par molécule ainsi que d'au moins un isocyanate aromatique et/ou aliphatique polyvalent avec de préférence en moyenne de 2 à au plus 4 groupes NCO par molécule, de préférence avec ce mélange de liant ou avec les constituants individuels de ce liant inorganique ainsi qu'éventuellement avec des auxiliaires,
c) le mélange de granulé/liant est moulé et comprimé,
d) le granulé/liant comprimé est durci et
e) le granulé/liant durci est démoulé.

10. Procédé selon la revendication 9, **caractérisé en ce que** les constituants individuels du liant organique du mélange rendu hydrophobe sont mélangés et, précisément dans l'ordre suivant : polyols, polyisocyanates et auxiliaires.

11. Procédé selon la revendication 9 ou 10, **caractérisé en ce que** le liant organique présente une viscosité de 1 000 à 20 000 mPa.s à la température d'application, de préférence à de 15 à 50°C, mesurée selon EN ISO 2555.

12. Procédé selon l'une quelconque des revendications 9 à 11, **caractérisé en ce que** l'on introduit le mélange de granulé/liant dans des moules non fermés et que l'on soutient l'introduction uniforme par des secousses, des vibrations et/ou la pression, la pression étant de préférence exercée avec des rouleaux en utilisant des agents de démoulage disponibles dans le commerce pour des colles de PU.

13. Procédé selon l'une quelconque des revendications 9 à 12, **caractérisé en ce que** dans un dispositif de mélange, de préférence une extrudeuse de mélange, le granulé léger est successivement mélangé pour le rendre hydrophobe avec l'agent hydrophobe, le liant organique est ensuite introduit et le mélange de granulé/liant est comprimé en continu dans une presse continue pour fournir le moulage et la compression.

14. Procédé selon l'une quelconque des revendications 9 à 13, **caractérisé en ce que** le durcissement est réalisé soit sans chauffage à température ambiante, soit au-delà de 60 et jusqu'à une température de presse de 250°C.
